Europäisches Patentamt

(19) European Patent Office

Office européen des brevets

(11) Numéro de publication: **0 196 954**
**B1**

(12) **FASCICULE DE BREVET EUROPÉEN**

(51) Int. Cl.⁴: **F 16 L 27/10,** F 16 L 33/00

(45) Date de publication du fascicule du brevet:
08.03.89

(21) Numéro de dépôt: 86400538.4

(22) Date de dépôt: 14.03.86

(54) Renforcement de talon de structure tubulaire à armature fractionnable.

(30) Priorité: 15.03.85 FR 8503811

(43) Date de publication de la demande:
08.10.86 Bulletin 86/41

(45) Mention de la délivrance du brevet:
08.03.89 Bulletin 89/10

(84) Etats contractants désignés:
AT BE CH DE FR GB IT LI LU NL SE

(56) Documents cité:
CH-A-488 119
US-A-2 262 311
US-A-2 298 736
US-A-3 861 721

Catalogue "Dilatoflex K" du Kléber Industrie FC175-
18,6/84

(73) Titulaire: Caoutchouc Manufacturé et Plastiques
Société Anonyme dite:, 143 bis rue Yves Le Coz
B.P. 554, F-78005 Versailles Cedex (FR)

(72) Inventeur: Roux, Claude, 101, route nationale Saint
Leger des Vignes, F-58300 Decize (FR)
Inventeur: Daignot, Bernard, Sougy S/Loire,
F-58300 Decize (FR)

## Description

La présente invention est relative à un système d'ancrage des éléments de traction d'une structure tubulaire souple, ledit ancrage, radial, étant exercé par appui axial sur un épaulement ou une bride après passage par une ouverture ménagée dans une paroi rigide ou contre-bride.

Dans la suite du texte, pour simplifier l'exposé de l'invention, le terme "manchon" sera utilisé pour définir la structure annulaire souple, le terme "talon" définissant l'extrémité du manchon qui présente un diamètre supérieur à celui du manchon et prend appui sur la paroi rigide, ci-après désignée par le terme "contre-bride".

On connait des manchons avec talon souple, dans lesquels le talon comporte, généralement, une armature interne, c'est à dire noyée dans le caoutchouc, de forme annulairè, constituée de caoutchouc à module élevé, d'une bande de textile, d'un toron textile ou métallique ou encore d'un ressort souple. Ce type de renforcement est adopté pour rendre le talon déformable afin de permettre le montage des contre-brides après la fabrication du manchon, par passage forcé du talon dans l'alésage. L'inconvénient majeur de ces systèmes est la nécessité d'un pincement entre deux plans de la bride plane, selon le dispositif adopté, par exemple, par la Société Kléber Industrie pour ses manchons de compensation Dilatoflex NT (dossier technique 79-BA1) soit encore par utilisation d'une forme, obtenue par usinage, pour qu'une pièce rigide vienne prendre appui sur un diamètre intérieur à ce talon déformable, comme, par exemple, dans les membranes de suspensions pneumatiques décrites dans le brevet Continental (FR-A-2 127 561) ou dans les manchons compensateurs de dilatation décrits dans les brevets FR-A-2 280 853 de Berghoffer ou FR-A-2 033 789 de Pirelli ou FR-A-2 006 730 de Continental.

Ces systèmes de manchons à talons souples nécessitent donc des techniques de montage qui provoquent, souvent, une forte concentration de contrainte à l'extrémité de la contre-bride, pouvant aller jusqu'à l'endommagement ou même la destruction de la fonction étanchéité. De ce fait, les manchons usuels à talons souples ne peuvent être utilisés que pour des pressions de service modérées.

Pour remédier à ces inconvénients, des solutions de manchons rigides, à large surface de contact avec la bride ont été proposées.

C'est, en effet, la solution adoptée par Kléber Industrie pour ses brides intégrées de tuyau, système Endflex, décrit dans le catalogue de tuyau Performer AD10, page 4 ou encore dans ses manchons de dilatation Dilatoflex K décrits dans le catalogue FC175-18 de juin 1984.

Ces dispositifs présentent, tous, une grande rigidité et sont, le plus souvent réalisés avec des éléments métalliques. De par leur conception, le caoutchouc se trouve comprimé sur une large surface d'appui ce qui améliore la répartition des contraintes et réduit la sensibilité au fluage, assurant, de ce fait, une meilleure garantie d'étanchéité et une possibilité d'utilisation à des pressions de service élevées.

Par contre, ces talons présentent, en raison de leur rigidité, l'inconvénient d'interdire le montage de contre-brides monoblocs après fabrication du manchon. Il est donc nécessaire de procéder au montage desdites contre-brides en cours de production et de vulcaniser le manchon ainsi équipé de ces pièces métalliques, qui en augmentent considérablement le poids et le volume.

En outre, les contre-brides ne sont plus démontables comme le montrent les catalogues Stenflex et General Rubber. Le fabricant des manchons doit alors constituer un stock important afin de disposer de manchons équipés de brides conformes aux différents raccordements normalisés.

Un manchon à brides démontables est décrit dans le brevet FR-A-2 447 512 mais les talons sont rigides et comportent des colerettes de renforcement séparées du manchon. La solution proposée, qui consiste à entourer la colerette par une forme de caoutchouc en U, nécessite la réalisation d'un moule très complexe.

Comme on peut le voir, d'après l'analyse précédente, une solution conforme à l'état de la technique et qui permette de répondre, à la fois, aux exigences de qualité d'ancrage (pour résister à des pressions ou à des tractions importantes en service), d'étanchéité de la liaison et de facilité de montage sur une bride ou un épaulement rigide, n'est pas connue.

L'invention a donc pour objet la réalisation d'un dispositif d'ancrage qui offre les avantages des deux types de talons connus sans en subir les inconvénients. Ledit ancrage est obtenu par un talon présentant une large surface d'appui sur la bride ou l'épaulement tout en offrant une souplesse permettant un pliage pour le passage du talon dans l'alésage.

L'invention permet ainsi une fabrication plus simple du manchon en éliminant les problèmes de poids et de volume dus à l'obligation de monter - dans les solutions connues antérieurement - les contre-brides, en cours de fabrication et surtout elle réduit, d'une manière considérable, ce qui représente un gain économique essentiel, la nécessité de maintenir un stock important de pièces en raison des différents raccordements normalisés, puisque la même gamme de manchons peut être équipée, au moment de la livraison, des différents types de contre-brides du commerce ou spéciales pour des fabrications à la demande. La gestion et la commercialisation des manchons se trouvent, ainsi, grandement facilitées; les délais de livraison sont considérablement réduits.

L'invention consiste en un dispositif d'ancrage radial d'une extrémité de structures tubulaires souples telles que les tuyaux en caoutchouc, les manchettes déformables, les compensateurs de dilatation, les membranes de suspension, par appui sur un épaulement ou une contre-bride après passage par une ouverture ou un alésage pratiqués sur une paroi rigide, ladite structure tubulaire souple - ou manchon - comportant au moins un talon renforcé par une armature noyée au sein du caoutchouc, monobloc et rigide au moment de la fabrication, caractérisé en ce que ladite armature est fractionnable mécaniquement, au moment du montage des brides sur la structure souple, en secteurs prédéfinis, afin d'offrir au talon une possibilité de pliage lui permettant de se glisser dans l'alésage de la paroi rigide sans altérer - après retour à la forme plane - la rigidité radiale qui confère audit talon la tenue nécessaire à son bon fonctionnement en service, lorsqu'il est serré entre la bride et la contre-bride.

L'élément essentiel de l'invention est constitué par l'armature rigide, de renforcement du talon, frette métallique ou plastique, de rigidité élevée, pré-divisée en au moins quatre secteurs par des zones de pré-division d'épaisseur minimale 0,05 mm.

Au moment de la fabrication du manchon, l'armature rigide se présente sous une forme monobloc ce qui facilite son maniement et son positionnement dans le moule. A la fin de l'opération de vulcanisation, le manchon présente donc un talon rigide. A ce moment ou lors du montage dans les contre-brides, l'armature est fractionnée en secteurs, mécaniquement, par appui au voisinage des zones de pré-division. Les secteurs, noyés dans le caoutchouc, s'articulent les uns par rapport aux autres sans blesser la carcasse de renforcement du manchon et permettent le passage du talon dans l'alésage, par pliage dudit talon devenu souple, la réouverture du talon sur l'épaulement se faisant naturellement après mise en place des contre-brides. Le talon, bloqué entre la bride de raccordement et la contre-bride ou l'épaulement reste de rigidité radiale équivalente à celle d'un talon comportant une armature monobloc, par effet d'auto-coincement.

L'armature à secteurs est réalisée, préférentiellement, en métal tel que de l'acier, de l'aluminium, du zamak ou tout autre matériau dont le module est supérieur à 1500 MPa. Elle peut, éventuellement être constituée de plastique renforcé ou de matériau composite à condition qu'il s'agisse d'un matériau à brisure franche dans les zones de pré-division. Elle peut donc être monomatière (métal, plastique renforcé ou composite) ou être fabriquée à partir d'une âme centrale, constituée de matériau cassant, surmoulée d'une matière plus résistante, pour obliger le fractionnement à se produire dans la zone désirée.

L'armature, ainsi prédivisée en secteurs, peut être réalisée par usinage partiel, par moulage ou par formage selon les possibilités de mise en oeuvre du matériau constitutif.

Au moment de la confection du manchon, l'armature peut être placée dans le talon soit nue, soit enveloppée d'un pli de mélange de caoutchouc ou encore d'un matériau textile fin, les deux dernières possibilités ayant l'avantage d'éviter la blessure de la carcasse du manchon au contact des angles de l'armature à secteurs.

Le nombre des secteurs est, de préférence compris entre sept et treize mais il peut être aussi grand que le permettent la résistance du matériau et l'économie de fabrication.

La forme générale des secteurs est, le plus souvent, trapézoïdale mais d'autres possibilités telles que, à titre d'exemples non limitatifs des formes rectangulaires, triangulaires, en losange ou en double trapèze pourraient être envisagées; elles compliqueraient la fabrication de l'armature à secteurs mais ne nuiraient pas à son fonctionnement.

Les zones de pré-division sont, le plus généralement, orientées radialement mais le fonctionnement du renforcement fractionnable n'est pas perturbé si les zones de pré-division présentent, par rapport au plan diamétral, une inclinaison faible, comprise entre 0 et 40°.

Les zones de pré-division sont rectilignes, dans le cas le plus fréquent, mais peuvent prendre la forme d'arcs de cercle, de courbes quelconques ou de chevrons. Leur largeur est comprise entre 5 % de la largeur de l'armature, pour permettre la formation de ponts de gomme entre les mélanges de caoutchouc qui l'entourent et 50 % de la largeur de l'armature, pour ne pas rendre l'armature trop fragile ou trop déformable.

La section de liaison des secteurs, avant fractionnement, est préférentiellement inférieure à 25 % de l'épaisseur de l'armature lorsque l'on utilise des matériaux métalliques mais elle peut atteindre 90 à 95 % de l'épaisseur de l'armature si l'on utilise un matériau très cassant dans lequel un simple amorçage ou un choc suffit à provoquer la cassure.

Les zones de pré-division sont préférentiellement situées sur la partie de l'armature qui se trouve du côté de l'alésage, mais toute autre disposition peut être utilisée.

Les caractéristiques et variantes de l'invention seront mieux comprises à la lecture de la description ci-après et en se référant aux dessins, sur lesquels:

- la figure 1 est composée de deux vues "en écorché" du talon d'un manchon compensateur de dilatation comportant soit une partie d'armature rigide classique soit une partie d'armature à secteurs.
- la figure 2 montre la structure d'un manchon souple comportant des talons, vu en coupe.
- les figures 3, 4, 5 et 6 représentent diverses réalisations de l'armature à secteurs pour le renforcement du talon.
- la figure 7 décrit différentes configurations de la zone de prédivision.
- la figure 8 illustre différentes possibilités de réalisation en 2 matériaux de l'armature à secteurs.
- la figure 9 représente, sur une même armature, les différentes formes que peuvent prendre les secteurs.

- la figure 10 montre la possibilité de protection de la carcasse du manchon.
- la figure 11 décrit la technique de fractionnement des secteurs.
- la figure 12 schématise le principe de montage des contre-brides.
- les figures 13 et 14 représentent, à titre non limitatif, deux applications particulières de l'invention.

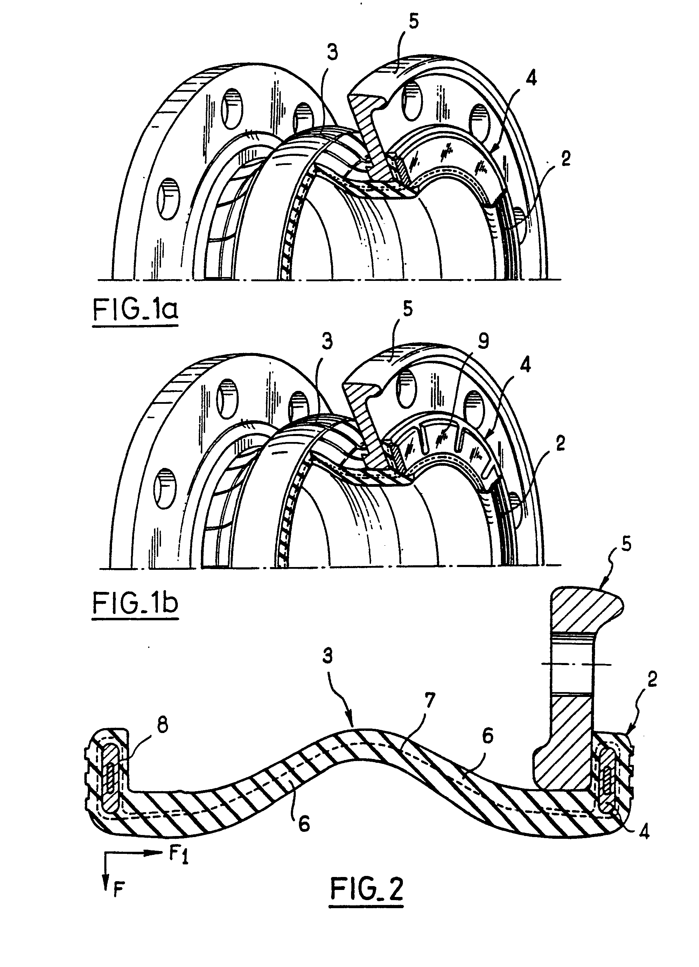

On peut voir, sur la figure 1, l'armature annulaire 1 du talon 2 d'un manchon compensateur de dilatation 3 classique à talon rigide muni de sa contre-bride 5 et l'armature à secteurs 4 du talon 2 qui s'y substitue d'après notre invention. La figure représente en sa partie a la pièce classique et en sa partie b la pièce selon l'invention que l'on obtiendrait après élimination de la couche supérieure, en caoutchouc, du talon 2 ainsi dénudé jusqu'à son armature 1 ou 4 selon le cas.

La figure 2 schématise, en coupe, la structure d'un manchon 3 dont le corps en caoutchouc 6 est armé d'une carcasse de câblés textiles ou métalliques 7 et dont les talons 2, qui s'appuient sur l'épaulement ou la contre-bride 5, sont renforcés par les armatures à secteurs 4. On peut y remarquer la remontée 8 de la carcasse 7 autour de l'armature 4 dans la zone des talons 2.

Cette figure montre également la force F qui se développe lors de la mise sous pression du manchon 3 et bloque les secteurs 9 de l'armature 4, les uns contre les autres, dans un effet d'autocoincement, sur le plan diamétral et ce, sans déplacement desdits secteurs.

La force F1 est la force de traction qui s'exerce sur la carcasse textile ou métallique 8 du manchon 3. La résistance à l'effort de traction F1, ou rigidité, n'est pas affectée par le fractionnement des secteurs, les performances du manchon 3 restant identiques, en service, à celles qui seraient obtenues avec un manchon 3 à talons 2 renforcés par des armatures rigides continues.

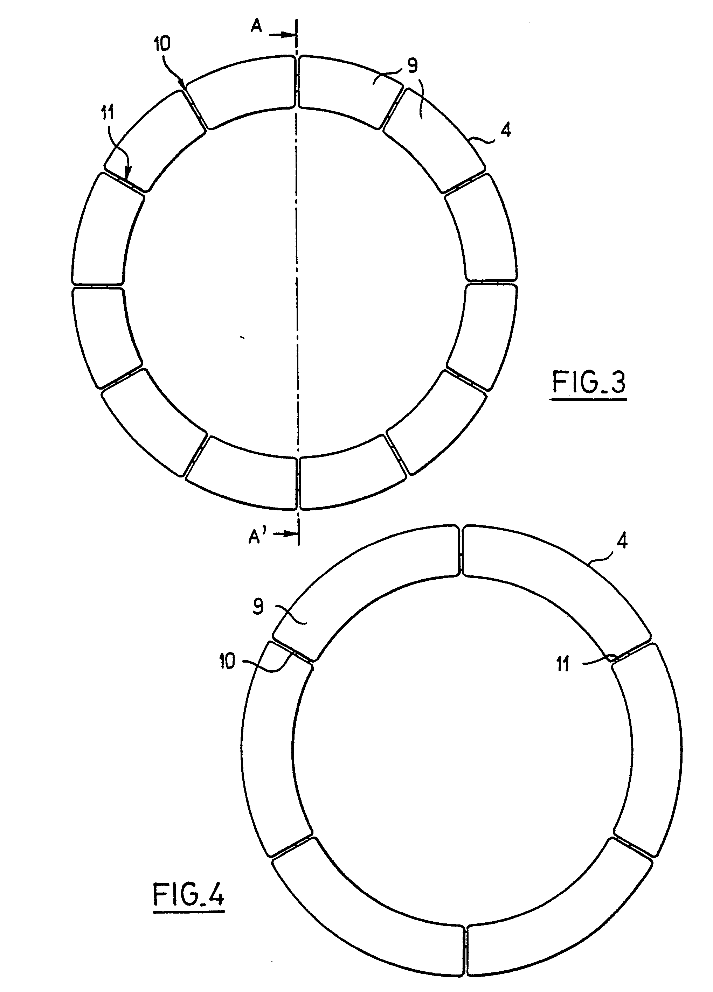

La figure 3 illustre une des configurations parmi les plus usuelles de l'armature à secteurs.

L'armature 4 est divisée en douze secteurs 9 de même taille, de forme générale trapézoïdale, séparés par des zones de pré-division 10 d'une épaisseur faible par rapport à celle du secteur 9. La partie de liaison 11 des secteurs, destinée à être cassée se situe au milieu de la zone de pré-division.

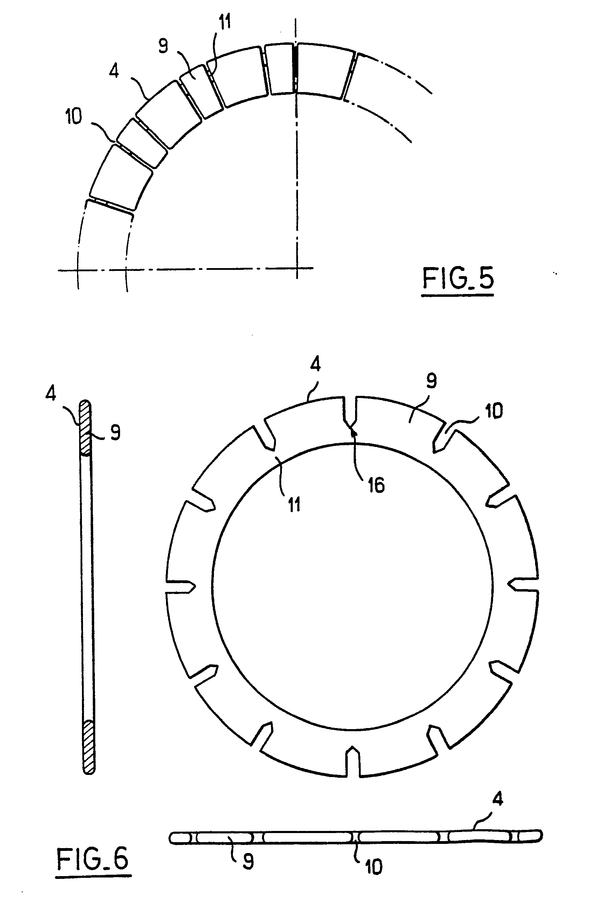

La figure 4 montre une autre configuration de l'armature à secteurs 4 dans laquelle le nombre des secteurs 9 est limité à six. Dans cette réalisation les secteurs 9 sont tous de taille identique. Les zones de pré-division 10 restent d'épaisseur faible par rapport à celle des secteurs 9, la partie de liaison 11 des secteurs 9, destinée à être cassée se situant, vers la partie intérieure de la zone de pré-division 10.

La figure 5 illustre une variante de réalisation de l'armature à secteurs 4 dans laquelle le nombre des secteurs 9 est de trentedeux, leur forme générale trapézoïdale, leur taille différente et leur arrangement en alternance, du type grand secteur/petit secteur. La partie de liaison 11 des secteurs 9, destinée à être cassée se situant vers la partie interne de la zone de prédivision 10.

La figure 6 montre une réalisation particulière de l'armature à secteurs 4 dans laquelle le nombre des secteurs 9 est de douze. Tous les secteurs sont de forme et de taille identiques. La largeur des zones de pré-division 10 est d'environ 6 % la largeur des secteurs 9. Les zones de pré-division 10 sont terminées par une partie en pointe 16 pour faciliter la cassure.

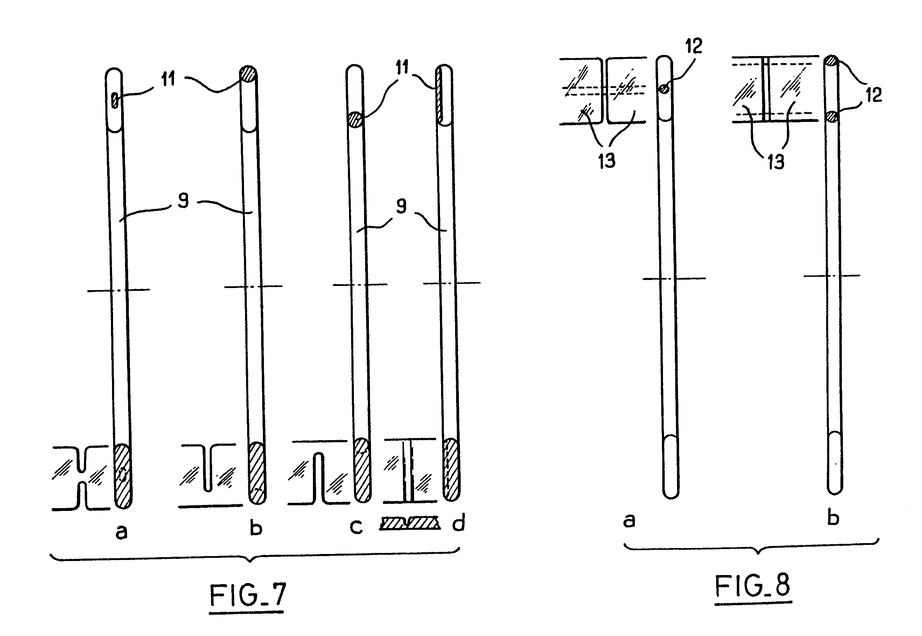

La figure 7 schématise différentes configurations possibles de la zone de pré-division 10 entre deux secteurs 9, selon la coupe AA' de la figure 3.

Dans la vue a, la partie de liaison 11 des secteurs 9 se trouve placée au voisinage du centre de l'armature; la réalisation peut être faite par moulage.

Dans la vue b, la partie de liaison 11 des secteurs 9 se trouve placée au voisinage du bord extérieur de l'armature; la réalisation peut être faite par sciage ou moulage.

Dans la vue c, la partie de liaison 11 des secteurs 9 se trouve placée au voisinage du bord intérieur de l'armature; la réalisation peut être faite par sciage ou moulage.

Dans la vue d, la partie de liaison 11 des secteurs 9 se trouve déportée sur une des faces. La réalisation peut être faite par moulage ou sciage.

La figure 8 illustre des variantes de réalisation de l'armature à secteurs 4, selon la coupe AA' de la figure 3, lorsque l'armature à secteur est réalisée à partir de deux matériaux différents, l'âme ou élément continu 12 étant constituée d'un matériau cassant, qui constitue la partie 11 de liaison des secteurs 9, le matériau de surmoulage 13 étant constitué du matériau rigide.

L'âme 12 peut être unique et occuper une position centrale par rapport au matériau de surmoulage 13 comme sur la vue a.

Il peut également y avoir deux âmes 12 qui occupent, comme dans la vue b, des positions extrêmes par rapport au matériau de surmoulage 13.

Il est également possible de réaliser l'armature à secteurs 4 par surmoulage, en plaçant une ou deux âme(s) 12 dans une position quelconque par rapport au matériau de surmoulage 13. Cette dernière configuration n'est pas représentée sur la figure.

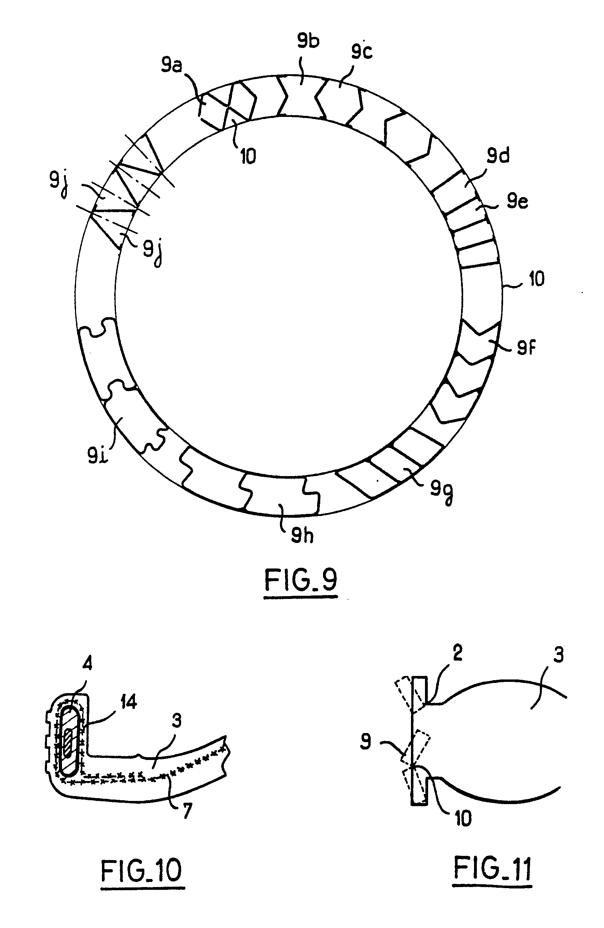

La figure 9 décrit à titre d'exemples non limitatifs quelques unes des formes qu'il est possible de donner aux secteurs 9 de l'armature 4.

C'est ainsi que les secteurs 9a sont en forme de losange et laissent entre eux une zone de pré-division 10 importante et une partie de liaison 11 de dimension réduite.

Les secteurs 9b et 9c sont en forme de double trapèze liés par la petite base dans le cas 9b et par la grande base dans le cas 9c. Les formes 9b et 9c sont, généralement, utilisées ensemble et laissent entre elles une zone de pré-division 10 de faible surface, la zone de cassure étant en forme de ligne brisée. Il serait également possible de n'associer que des secteurs de forme 9b ou que des secteurs de forme 9c ce qui accroîtrait la souplesse du talon en rendant plus importante la surface de la zone de pré-division séparant deux secteurs. Ces configurations n'associant que des secteurs de forme 9b ou 9c ne sont pas représentées sur le dessin.

Les formes 9d et 9e sont trapézoïdales. Les zones de prédivision 10 sont de faible surface.

Les formes en chevron 9f ou les formes plus complexes telles que 9h et 9i peuvent s'utiliser dans une structure quasi imbriquée, donc avec une zone de pré-division 10 de faible largeur.

Avec la forme parallélépipédique 9g il est possible d'obtenir, - comme avec les formes 9b, 9c, 9h, 9i et 9j, - un effet de coincement plus important qu'avec les formes 9a, 9d et 9e en raison de la forme même des secteurs.

Les formes triangulaires 9j se prêtent à un montage tel que décrit sur le dessin comme à un assemblage (non représenté) où toutes les pointes ou toutes les bases des secteurs triangulaires seraient dirigées vers le centre de l'armature fractionnable.

La figure 10 décrit une possibilité de protection de la carcasse de renforcement 7 du manchon 3 en entourant l'armature à secteurs 4 par un pli protecteur 14 constitué de mélange à base de caoutchouc ou d'un textile fin pour protéger ladite carcasse de renforcement 7 d'une blessure au contact des bords de l'armature à secteurs 4.

Sur la figure 11 est illustrée la manière dont se produit le fractionnement des secteurs 9 à l'intérieur du talon 2 du manchon 3.

Dans la pratique, ce fractionnement intervient soit immédiatement après la fabrication et la vulcanisation du manchon, et devient alors une opération de finition, soit au moment du montage des contre-brides, à la livraison du manchon.

Dans tous les cas, l'opération de fractionnement ne nécessite que des outils simples, un jeu de pinces, par exemple, pour effectuer par appui sur deux secteurs consécutifs 9 de l'armature à secteurs 4, située dans le talon 2 du manchon 3, au voisinage des zones de pré-division 10.

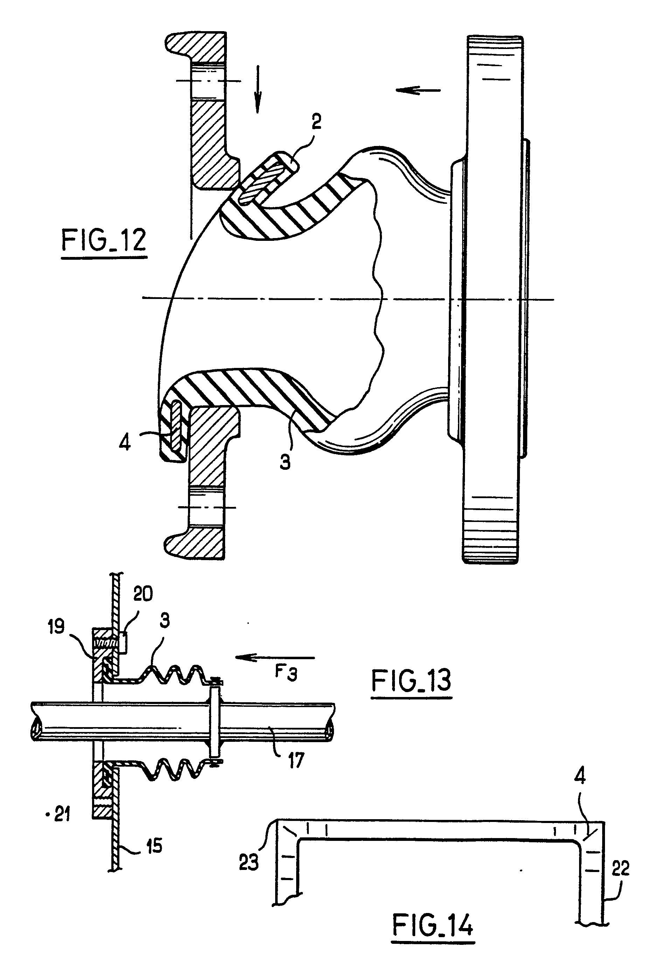

La figure 12 schématise le montage des contre-brides 5 sur le manchon 3 par passage forcé du talon 2, comportant l'armature à secteurs (4) qui a été préalablement fractionnée en secteurs indépendants 9, au travers de l'alésage de la contre-bride 5.

La figure 13 illustre une application de l'invention à la traversée d'une cloison ou d'une paroi 15, (par exemple, celle d'une réservoir ou d'un tuyau rigide) par une tuyauterie, une tige ou une gaine (17) maintenue par un manchon 3 grâce à une bride (19) fixée par boulons (20) lorsque la partie interne (21) est inaccessible. La flèche F3 indique le sens de montage.

Les figures précédentes ont été illustrées le plus souvent par l'application à des pièces de révolution, mais le dispositif d'ancrage proposé n'est pas limité à ce type de pièces; son fonctionnement serait tout aussi satisfaisant pour le montage sur des pièces dont l'ouverture serait ovale ou rectangulaire.

La figure 14 donne un exemple - à titre non limitatif - d'une ouverture rectangulaire telle que celle d'une gaine de ventilation 22 dans laquelle l'armature à secteur 4 ne serait insérée que dans les zones angulaires 23 de la gaine.

L'armature fractionnable, objet de l'invention, sera avantageusement utilisée pour le renforcement des talons de tuyaux, de manchons compensateurs de dilatation ou de membranes de suspension pneumatiques de véhicules ferroviaires ou terrestres.

Les applications de l'invention ne sont pas limitées aux cas illustrés. Entre autres possibilités, il est avantageux d'utiliser le système décrit dans l'invention pour l'ancrage des extrémités, qui sont alors surmoulées de caoutchouc, de cables de tension ou de précontrainte, ou encore pour l'ancrage sur une ouverture de forme quelconque des dispositifs souples d'évacuation d'urgence dans les bâtiments.

Comme on le voit, par la description et les illustrations précédentes, le dispositif d'ancrage proposé permet le montage facile d'un manchon, d'une gaine ou de tout autre objet souple, de forme tubulaire, sur une forme rigide, à la seule condition que l'objet à ancrer soit muni d'un talon dont l'armature, selon l'invention, est fractionnable.

L'invention évite de ce fait la manutention de pièces lourdes et volumineuses qui viennent compliquer les moules ou les outils de fabrication des manchons. Elle réduit les nécessités de stockage d'une grande variété de manchons, comportant chacun des contre-brides de raccordement; elle diminue également les surfaces nécessaires au stockage, les manchons sans contre-brides étant moins volumineux que ceux qui en sont équipés; elle simplifie l'exécution des commandes en permettant le montage, pour un diamètre donné, des différents types de contre-brides; elle permet donc, par ces divers avantages un gain appréciable de productivité et améliore les conditions de travail lors de fabrication des manchons.

Enfin, en cas d'avarie du manchon, les contre-brides sont démontables et donc réutilisables sur un manchon de remplacement, ce qui représente une économie non négligeable.

**Revendications**

1. Dispositif d'ancrage radial d'une extrémité de structures tubulaires souples (3), telles que des tuyaux en caoutchouc, des manchettes déformables, des compensateurs de dilatation, des membranes de suspension, par appui sur un épaulement ou une bride-après passage par une ouverture ou un alésage pratiqués sur une paroi rigide, ladite structure tubulaire souple - ou manchon - (3) comportant au moins un talon (2) renforcé par une armature (4), noyée au sein du caoutchouc, monobloc et rigide au moment de la fabrication, caractérisé en ce que ladite armature (4) est fractionnable mécaniquement en secteurs (9) prédéfinis au moment du montage, afin d'offrir au talon (2) une possibilité de pliage lui permettant de se glisser dans l'alésage de la paroi rigide sans altérer sa rigidité radiale.

2. Dispositif d'ancrage selon la revendication 1, caractérisé en ce que les secteurs (9) de l'armature fractionnable (4) du talon (2) ont même géométrie.

3. Dispositif d'ancrage selon l'une des revendications 1 ou 2, caractérisé en ce que l'épaisseur de la section de liaison (11) des secteurs (9) de l'armature (4) soit, au plus, égale à 25 % de l'épaisseur de ladite armature.

4. Dispositif d'ancrage selon l'une des revendications 1 à 3, caractérisé en ce que la largeur des zones de pré-division (10) de l'armature (4) est comprise entre 5 et 50 % de la largeur de ladite armature.

5. Dispositif d'ancrage selon l'une des revendications 1 à 4, caractérisé en ce que les zones de pré-division (10) des secteurs (9) de l'armature (4) présentent, par rapport au plan radial de ladite armature, une inclinaison inférieure à 40°.

6. Dispositif d'ancrage selon l'une des revendications 1, 3, 4, ou 5 caractérisé en ce que l'armature fractionnable (4) est contituée d'une alternance de secteurs (9) de géométries différentes.

7. Dispositif d'ancrage, selon l'une des revendications 1 à 6, caractérisé en ce que l'armature fractionnable (4) du talon (2) est réalisée en un matériau métallique ou plastique dont le module est au moins égal à 1500 MPa.

8. Dispositif d'ancrage selon l'une des revendications 1 à 6, caractérisé en ce que l'armature fractionnable (4) du talon (2) est bimatière, l'une des matières, constituant l'âme (12), étant un matériau cassant, l'autre, constituant les secteurs étant un matériau rigide.

9. Dispositif d'ancrage selon l'une des revendications 1 à 8, caractérisé en ce que l'armature fractionnable (4) de renforcement du talon (2) comporte 8, 12, 16 ou 24 secteurs (9).

10. Dispositif d'ancrage selon l'une des revendications 1 à 9, caractérisé en ce que l'armature fractionnable (4) de renforcement du talon (2) est enveloppée d'un pli protecteur de mélange de caoutchouc ou de textile fin.

11. Structure tubulaire souple de section circulaire, ovale, carrée ou rectangulaire, caractérisée en ce que l'un au moins des talons (2) comporte un dispositif d'ancrage conforme à l'une des revendications 1 à 10.

12. Manchon compensateur de dilatation caractérisé en ce que l'un au moins des talons (2) comporte un dispositif d'ancrage conforme à l'une des revendications 1 à 10.

13. Tuyau souple comportant des brides intégrées caractérisées en ce que leurs talons (2) comportent un dispositif d'ancrage conforme à l'une des revendications 1 à 10.

14. Membrane de suspension caractérisée en ce que l'un au moins des talons (2) comporte un dispositif d'ancrage conforme à l'une des revendications 1 à 10.

**Patentansprüche**

1. Vorrichtung zum radialen Verankern eines Endes von geschmeidigen schlauchförmigen Strukturen (3), wie Gummischläuchen, verformbaren Manschetten, Dehnungsausgleichern, Aufhängungsmembranen, durch Abstützung an einer Schulter oder einem Flansch nach Durchtritt derselben durch eine Öffnung oder Bohrung in einer starren Wand, wobei die schlauchförmige Struktur - oder Muffe (3) - zumindest einen Wulst (2) aufweist, der durch eine im Gummiinnern während der Fertigung eingebettete einstückige und starre Armierung (4) verstärkt ist, dadurch gekennzeichnet, daß die Armierung (4) beim Montieren mechanisch in vorbestimmte Sektoren (9) zerbrechbar ist, so daß der Wulst (2) umgebogen werden und so in die Bohrung in der starren Wand eingleiten kann, ohne daß seine radiale Steifigkeit geändert wird.

2. Verankerungsvorrichtung nach Anspruch 1, dadurch gekennzeichnet, daß die Sektoren (9) der zerbrechlichen Armierung (4) des Wulstes (2) in ihrer geometrischen Form übereinstimmen.

3. Verankerungsvorrichtung nach einem der Ansprüche 1 oder 2, dadurch gekennzeichnet, daß die Dicke des Verbindungsabschnittes (11) der Sektoren (9) der Armierung (4) höchstens 25 % der Gesamtdicke der Armierung beträgt.

4. Verankerungsvorrichtung nach einem der Ansprüche 1 bis 3, dadurch gekennzeichnet, daß die Breite der Armierung (4) an den Sollbruchstellen (10) zwischen 5 und 50 % der Gesamtbreite der Armierung beträgt.

5. Verankerungsvorrichrung nach einem der Ansprüche 1 bis 4, dadurch gekennzeichnet, daß die Sollbruchstellen (10) zwischen den Sektoren (9) der Armierung (4) in bezug auf die Radialebene der Armierung eine Neigung kleiner 40° haben.

6. Verankerungsvorrichtung nach einem der Ansprüche 1, 3, 4 oder 5, dadurch gekennzeichnet, daß die zerbrechliche Armierung (4) aus einander im Wechsel folgenden Sektoren (9) unterschiedlicher geometrischer Form besteht.

7. Verankerungsvorrichtung nach einem der Ansprüche 1 bis 6, dadurch gekennzeichnet, daß die zerbrechliche Armierung (4) des Wulstes (2) aus einem Metall oder Kunststoff mit einem Modul von zumindest 1500 MPa besteht.

8. Verankerungsvorrichtung nach einem der Ansprüche 1 bis 6, dadurch gekennzeichnet, daß die zerbrechliche Armierung (4) des Wulstes (2) aus zwei Materialien besteht, wobei das eine, den Kern (12) bildende, ein leicht zerbrechliches Material ist und das andere, die Sektoren bildende Material ein starres Material ist.

9. Verankerungsvorrichtung nach einem der Ansprüche 1 bis 8, dadurch gekennzeichnet, daß die zerbrechliche Armierung (4) zur Verstärkung des Wulstes (2) 8, 12, 16 oder 24 Sektoren (9) aufweist.

10. Verankerungsvorrichtung nach einem der Ansprüche 1 bis 9, dadurch gekennzeichnet, daß die zerbrechliche Armierung (4) zur Verstärkung des Wulstes (2) mit einer Schutzschicht aus einem Gummigemisch oder einem feinen Textilmaterial ummantelt ist.

11. Schlauchförmige Struktur mit rundem, ovalem, quadratischem oder rechteckigem Querschnitt, dadurch gekennzeichnet, daß zumindest einer der Wulste (2) eine Verankerungsvorrichtung nach einem der Ansprüche 1 bis 10 aufweist.

12. Dehnungsausgleichsmuffe, dadurch gekennzeichnet, daß zumindest einer der Wulste (2) eine Verankerungsvorrichtung nach einem der Ansprüche 1 bis 10 aufweist.

13. Schlauch mit integrierten Flanschen, dadurch gekennzeichnet, daß ihre Wulste (2) eine Verankerungsvorrichtung nach einem der Ansprüche 1 bis 10 aufweisen.

14. Aufhängungsmembran, dadurch gekennzeichnet, daß zumindest einer der Wulste (2) eine Verankerungsvorrichtung nach einem der Ansprüche 1 bis 10 aufweist.


**Claims**

1. Device for radial fastening at one end of flexible tubular structures (3) such as rubber hoses, deformable sleeves, expansion compensators, suspension diaphragms, by being thrust against a shoulder or flange after passing through an opening or bore formed in a rigid wall, the said flexible tubular structure or sleeve (3) comprising at least one bead (2) reinforced by a stiffener (4) embedded within the rubber, which is in one piece and rigid at the time of production, characterised in that the said stiffener (4) is mechanically breakable into predetermined sectors (9) at the time of installation, to provide the bead (2) with a bending facility enabling the same to be slipped into the bore of the solid wall without impairment of its radial rigidity.

2. Fastening device according to claim 1, characterised in that the sectors (9) of the breakable stiffener (4) of the bead (2) have the same geometry.

3. Fastening device according to one of the claims 1 or 2, characterised in that the thickness of the connecting section (11) of the sectors (9) of the stiffener (4) is equal to at most 25 % of the thickness of the said stiffener.

4. Fastening device according to one of the claims 1 to 3, characterised in that the width of the pre-splitting areas (10) of the stiffener (4) is comprised between 5 and 50 % of the width of the said stiffener.

5. Fastening device according to one of the claims 1 to 4 characterised in that the presplitting areas (10) of the sectors (9) of the stiffener (4) have a slope lower than 40° with respect to the radial plane of the said stiffener.

6. Fastening device according to one of the claims 1, 3, 4 or 5, characterised in that the breakable stiffener (4) comprises an alternation of sectors (9) of different geometry.

7. Fastening device according to one of the claims 1 to 6, characterised in that the breakable stiffener (4) of the bead (2) is produced from a metal or plastics material the modulus of which is at least equal to 1500 MPa.

8. Fastening device according to one of the claims 1 to 6, characterised in that the breakable stiffener (4) of the bead (2) comprises two materials, the one of the materials forming the core (12) being a breakable material, the other which forms the sectors, being a rigid material.

9. Fastening device according to one of the claims 1 to 8, characterised in that the breakable stiffener (4) for reinforcement of the bead (2) comprises 8, 12, 16 or 24 sectors (9).

10. Fastening device according to one of the claims 1 to 9, characterised in that the breakable stiffener (4) for reinforcement of the bead (2) is covered with a protective layer of composite rubber or thin fabric.

11. Flexible tubular structure having a circular, oval, square or rectangular cross-section, characterised in that at least one of the beads (2) comprises a fastening device according to one of the claims 1 to 10.

12. Expansion compensator sleeve characterised in that at least one of the beads (2) comprises a fastening device according to one of the claims 1 to 10.

13. Flexible hose comprising integral flanges, characterised in that their beads (2) comprise a fastening device according to one of the claims 1 to 10.

14. Suspension diaphragm characterised in that at least one of the beads (2) comprises a fastening device according to one of the claims 1 to 10.

FIG.1a

FIG.1b

FIG.2

$F_1$

$F$

FIG.3

FIG.4

FIG. 5

FIG. 6

FIG. 7

FIG. 8

EP 0 196 954 B1

FIG.9

FIG.10

FIG.11

FIG_12

2

4

3

FIG_13

20

19

3

F3

17

21

15

FIG_14

4

23

22